# EUROPEAN PATENT APPLICATION

(11) **EP 0 656 704 A1**
(43) Date of publication of application: **07.06.1995**
(21) Application number: 94203410.9
(22) Date of filing: 23.11.1994
(51) Int. Cl.: H04J 3/16, H04J 3/24

(54) **Method and devices for transmitting data packets via a network operating in accordance with the synchronous digital hierarchy (SDH)**

(30) Priority: 25.11.1993 NL 9302040
(71) Applicant: Koninklijke PTT Nederland N.V., NL-2509 CH The Hague (NL)
(72) Inventor: Hol, Cornelis, NL-3334 AM Zwijndrecht (NL)

(57) **Abstract**

The invention relates to a method for transmitting data packets from a plurality of sources (e.g. 3A), both synchronous and asynchronous, to a plurality of destinations (e.g. 3C) via a network (1) operating in accordance with the synchronous digital hierarchy (SDH). Between the sources (3A) and the network (1) there is connected a first station (2A), and between the network (1) and the destinations (3C) there is connected a second station (2C). The data packets are combined, in the first station (2A), in a frame (100), which frame is transmitted via the network (1). The data packets are removed, in the second station (2C), from the frame so as to be passed to their respective destinations (3C). The invention also relates to devices for implementing the method, and to a system in which the method is applied.

## Description

### BACKGROUND OF THE INVENTION

The invention relates to a method for transmitting, via a network operating in accordance with the synchronous digital hierarchy (SDH), data packets from a plurality of sources to a plurality of destinations, where the sources can be both synchronous and asynchronous. The invention also relates to devices for implementing the method, and to systems for data transmission in which the method is applied.

The so-called synchronous digital hierarchy (SDH) is a relatively new standard for telecommunication. Each user of an SDH network is allocated a fixed amount of capacity in discrete units. Said discrete units form standard units which are known as "virtual containers" (VCs). While it is possible, by using said virtual containers, to transmit large quantities of data at relatively high speeds, an essentially rigid structure of standard bit rates is produced. In many cases this leads to transport capacity being wasted as a result of virtual containers being allocated which have a greater capacity than the average volume of traffic, for example in the case of users with a requested capacity which is only slightly larger than that of a virtual container, or in the case of users with a strongly fluctuating volume of traffic. In the last-mentioned case, the user in question will be allocated a relatively large number of virtual containers, of which often a large number are not filled or barely filled. Since containers which have been allocated to a particular user are not available to other users, the unused capacity in question is wasted.

Reference [5] describes various techniques for interfacing to ISDN, particularly B-ISDN. The techniques disclosed include the combination of ATM and STM in hybrid data structures, but do not pertain to SDH, nor to the specific problems associated with the rigid container structure of SDH.

Reference [3] discloses a method of combining in a synchronous frame asynchronous cells with isochronous channels, in particular combining PCM channels with channels having cells according to the IEEE standard 802.6. This reference does not deal with SDH, nor does it suggest how synchronous and asynchronous channels can efficiently be combined in an SDH-container.

### SUMMARY OF THE INVENTION

The object of the invention is to overcome the abovementioned and other drawbacks of the prior art and to provide a method for transmitting data packets via a network operating in accordance with the synchronous digital hierarchy, which method offers greater efficiency and flexibility, particularly for users (sources) with fluctuating capacity requirements and for users whose capacity requirements differ considerably between one another. To this end, the method according to the invention is characterized by the steps of:
- sending the data packets to a first station connecting the sources and the network,
- in the first station, combining the data packets in one or more frames, each frame comprising time slots for accommodating data packets from synchronous sources, and each frame being capable of accommodating data packets from asynchronous sources in time slots which are not or not entirely used by synchronous sources,
- transmitting the frames via the network, in suitable containers, to a second station connecting the network and the destinations,
- in the second station, taking the data packets from the frames, and
- sending the data packets to their respective destinations.
According to the invention, data packets from a particular source (user) are therefore not transmitted in virtual containers which exclusively contain data packets from that particular source but data packets from a plurality of users are combined into frames which in turn are transmitted according to the synchronous digital hierarchy. This means that the virtual containers transmitted in accordance with the invention contain frames in which data packets from a plurality of sources are combined. By this form of multiplexing it is possible to utilize the available capacity of the network more efficiently, since statistical multiplexing gains can be achieved, particularly for larger numbers of users.

It should be noted that the transmission of data with the aid of data frames is known per se from, for example, the American Patent US 4 893 306 (reference [2]). This reference does not, however, relate to SDH, while the frames described are essentially data packets. Further, according to the said patent, a frame is allocated to only one particular source. According to the invention, data from a plurality of sources are specifically combined in one frame.

In order to combine data packets from both synchronous and asynchronous sources efficiently in one frame, according to the invention each frame comprises time slots for accommodating data packets from synchronous sources. These time slots may be allocated to specific sources, or may be available for synchronous traffic in general. As not all time slots of a frame may be used up by synchronous sources, or some time slots may be filled only partially with synchronous traffic, the capacity of a frame is more eficiently utilized when data packets from asynchronous sources can be accommodated in time slots which are not, or not entirely, used by synchronous sources. In other words, left-over capacity of the (synchronous) time slots is advantageously used for asynchronous traffic.

Essentially, according to the present invention, data packets from both synchronous and asynchronous sources are incorporated in a frame in a time-multiplexed manner, packets from asynchronous sources being distributed over the space which remains after the packets from synchronous sources have taken up their position. Thus an efficient utilization of the fixed capacity of SDH-containers is made possible.

Advantageously, for each time slot of a frame a flag (consisting of one or more bits) is provided for specifying whether the time slot in question is used at least partially for a synchronous source. This flag ("S/A flag") enables a rapid assignment of asynchronous traffic to available time slots. If the time slot in question is used partially or entirely for a synchronous source, there is advantageously provided, for each time slot of a frame, a number of bits ("length flag") for specifying which part of the time slot in question is used for the synchronous source. As a result, when assigning traffic to time slots in the first station, an efficient allocation of the asynchronous data packets can be realized, as the allocation of the synchronous traffic (and hence the above-mentioned length flag) may be realized in advance, i.e. before the actual allocation of the asynchronous traffic. The total asynchronous capacity of a frame may thus also be known in advance. Furthermore, the use of said length flag enables in the second station a simple and rapid separation of the synchronous and asynchronous data packets, as the synchronous and asynchronous parts of the frame can easily be identified.

A further advantage of the use of the above-mentioned bit (or bits) of the S/A flag (i.e. for specifying whether the time slot in question is used for a synchronous source or not) is the fact that, if a specific time slot is not used for synchronous traffic at all, the length flag (i.e. the bits specifying the part of the slot used for synchronous traffic) can be omitted, thus making more capacity available for asynchronous traffic. Thus, the greater the relative amount of asynchronous traffic offered (i.e. relative to the amount of synchronous traffic), the more capacity for asynchronous traffic is available.

Preferably, a number of bits of a frame is reserved for asynchronous sources. This insures a minimum capacity for asynchronous traffic, even if all time slots are completely taken up by synchronous traffic. Advantageously, this reserved capacity for asynchronous traffic is combined with, and preferably contiguous with, the available capacity provided by unused length flag bits.

In order to simplify, in the second station, the passing to the respective destinations of the data packets transmitted with a frame, the data packets from asynchronous sources, prior to being incorporated in the frame, are preferably transformed, by encapsulation, into frame data packets. The encapsulation advantageously comprises adding identification of the destination of the data packet in question. This encapsulation provides a further improvement of the inventive method by leaving the data packets and their control information intact, thus allowing the support of virtually any data packet transmission technique. Furthermore, the use of encapsulation makes it possible to process asynchronous data packets in any arbitrary order as no allocation to specific destination-related fields is necessary.

It is, however, also possible to form frame data packets by extracting the payload (data) of the data packets received and inserting these data into newly formed frame data packets.

Preferably, a frame is transmitted as a virtual container of the type 4 (VC-4) in a synchronous transport module. Such a virtual container provides a suitable transport capacity, while suitable transmission components for processing such containers are commercially available. If required, use may be made, however, of a different type of container, such as a VC-12.

The present invention further provides a device for combining, in a frame, data packets to be transmitted via a network operating in accordance with the synchronous digital hierarchy, which device comprises means for extracting data packets from a data stream, means for combining the extracted data packets in a frame, and means for transmitting the frame in one or more virtual containers, each frame comprising time slots for accommodating data packets from synchronous sources, and each frame being capable of accommodating data packets from asynchronous sources in time slots which are not or not entirely used by synchronous sources. Such a device, which can be used in the abovementioned first station, permits efficient implementation of the invention. Preferably, said device is provided with means for encapsulating data packets in a further data packet, which means are designed for appending a header which comprises an identification of the destination of the data packet in question.

For use in the abovementioned second station, the present invention provides a device for decomposing a frame transmitted via a network operating in accordance with the synchronous digital hierarchy, which frame comprises a number of data packets, comprising means for decoding structural information of the frame, means for decomposing the frame, on the basis of the decoded structural information, and means for transmitting the data packets derived from the frame, said structural information comprising, for each time slot of a frame, a bit for specifying whether the time slot in question is used at least partially for a synchronous source, and said structural information preferably also comprising, for each time slot which is at least partially used for a synchronous source, a number of bits for specifying which part of the time slot in question is used for the synchronous source.

The present invention further provides a system for data transmission in accordance with the synchronous digital hierarchy (SDH), arranged for applying the abovementioned method.

### REFERENCES

[1] CCITT recommendation G.707
[2] US 4 893 306
[3] US 5 208 807 & EP-A-0 440 059
[4] US 3 988 545
[5] S.E. Minzer: 'Broadband user-network interfaces to ISDN', ICC87 (IEEE), Vol. 1, Seattle (US), 1987.

### PREFERRED EMBODIMENTS

The invention will be explained below in more detail with reference to illustrative embodiments shown in the figures.

Fig. 1 shows, schematically, an SDH system with a plurality of users.

Fig. 2 shows, schematically, an embodiment of a device according to the invention.

Fig. 3 shows, schematically, a data frame according to the invention.

Fig. 4 shows a frame data packet according to the invention.

Fig. 5 shows an alternative frame data packet according to the invention.

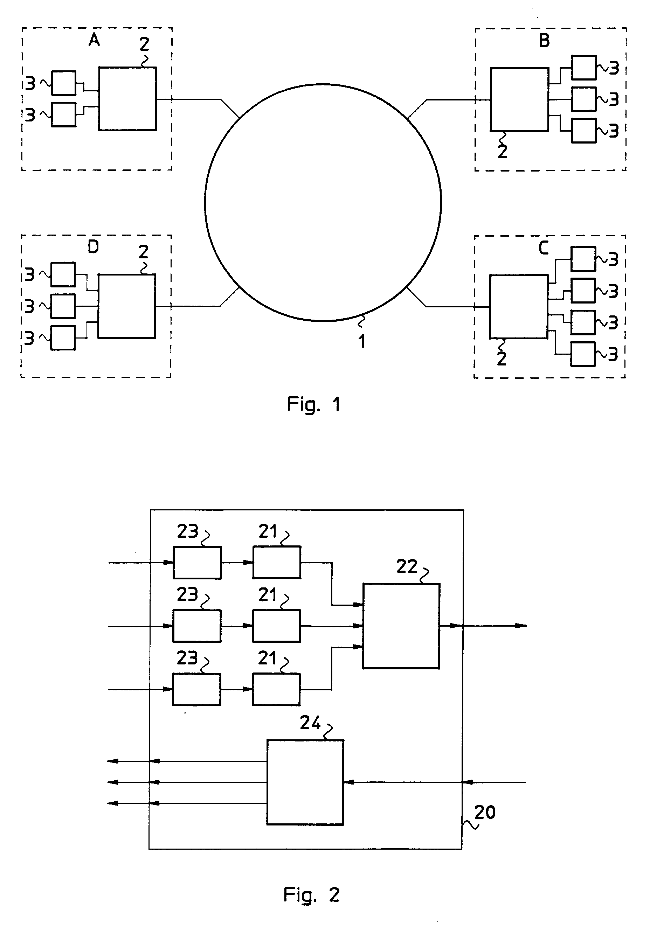

The communication system shown schematically in Fig. 1 comprises an SDH network 1 which connects four areas A, B, C and D via respective stations 2 (denoted 2A, 2B, 2C and 2D respectively). In each of the areas there may be a plurality of users 3 (denoted 3A, 3A', 3B, 3B', 3B'', etc., respectively), these users being sources and/or destinations of data packets. Users from different areas, for example A and C, can exchange information (data packets) via the SDH network 1. According to the prior art, virtual containers are provided with data packets for each user separately, whereupon the containers are transported via the network. In the case of asynchronous users, these containers will sometimes be entirely filled, but usually will be filled only partially. According to the invention, in each station containers are filled with a frame in which data packets from a plurality of users from that area are combined. The structure of such a station according to the invention will be explained in more detail with reference to Fig. 2.

The device 20 according to the invention, shown schematically in Fig. 2, comprises packet extractors 21 and a multiplexer 22. The multiplexer 22 is preferably designed for multiplexing data packets, forming a frame, inserting the multiplexed data packets into the frame, and transmitting the frame. Advantageously the device 20 may have incorporated, between the incoming channels and the packet extractors 21, buffer and/or coupling circuits 23 (interfaces) which change the transmission rate of the incoming channels to rates suitable for the network in question. With the aid of the device 20 of Fig. 2, which can be employed in a station 2 (see Fig. 1), said data streams can be transported efficiently via an SDH network.

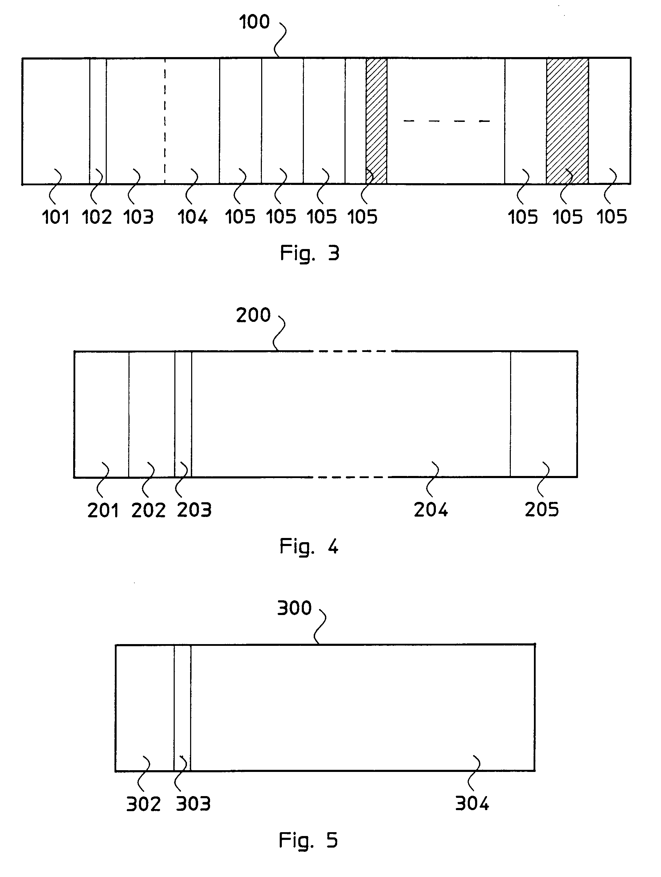

With the aid of the packet extractors 21, which in principle can be constituted by commercially available packet extractors, the relevant data, i.e. either the payload of data packets, or data packets in their entirety, are extracted, in the form of packets, from the data streams. Said packets are in turn combined into a frame. Advantageously, such a frame has a specific structure, as will be explained in more detail with reference to Fig. 3. The device according to the invention can be assembled from commercially available components, but can also be constituted by an application-specific integrated circuit ("ASIC").

Advantageously, the device 20 further comprises a demultiplexer 24 for demultiplexing frames received from the network. In this context, the demultiplexer 24 is preferably suitable for decoding structural information of the frame, such as the occupation of time slots by synchronous sources, the decomposition of the frame on the basis of the structural information, and the transmission of data packets to different destinations (users).

The purpose of the structure of a frame according to the invention is to combine efficiently data from various sources into a unit which can be transported via an SDH network in a simple manner. Said sources can be either synchronous or asynchronous. In Fig. 3, by way of example, a frame is depicted which has a suitable structure, a frame advantageously having a size which makes it possible to transport this frame via the SDH network in a virtual container. Preferably, the frame can be mapped into a virtual container of type 4 (VC-4).

The frame 100 shown schematically in Fig. 3 has a length of 2340 octets (bytes) which corresponds to 2340 × 8 bits = 18720 bits. This length corresponds to the payload of a VC-4. The frame itself comprises a header with an "overhead" formed by the fields 101-103, and a payload formed by the fields 104 and 105. The mutual relationship between header and load is variable and depends on the user configuration and the amount and type of the data traffic offered.

The payload of the frame, in the example shown, comprises, for the benefit of synchronous users, 70 time slots 105 of 32 octets each (17920 bits). These slots, of which in Fig. 3, for the sake of clarity, only a limited number are shown, may each be allocated, by time-division multiplexing, to a specific user. Optionally, the space of one or more slots can also be used, in its entirety or in part, for asynchronous users, as indicated in Fig. 3 for a few slots 105 by means of hatching. The payload further comprises a field 104 which is reserved for asynchronous traffic. The length of the field 104 depends on the length of the field 103, so that the boundary between the fields 103 and 104 is not fixed. In the example shown, the size of the field 104 can vary from 233 to 723 bits.

The header of the frame comprises, in the field 101, seventy so-called S/A bits (S/A flags) which specify whether the corresponding slot (105) has been allocated to a synchronous user. If the slot has not been allocated to a synchronous user, it is available, in principle, for asynchronous traffic, as an extension to the field 104 in which a number of bits are reserved for asynchronous traffic. The header of the frame further comprises, in the field 102, seven check bits, by means of which an error check of the S/A bits of the field 101 is possible.

If a slot (105) has been allocated to a synchronous user, supplementary information concerning the time slot in question is provided with the aid of seven supplementary bits (length flag) in the field 103. Since the presence of said supplementary bits depends on the specific occupation of the frame, as depicted in the field 101, the length of the field 103 can vary, specifically - in the example shown - from 0 to 490 (=70×7) bits. Of the seven bits per time slot, six determine that part of the time slot which is utilized for synchronous traffic, and one bit serves as a parity bit for the benefit of error checks. The said six "length bits" make it possible to combine synchronous and asynchronous traffic in one slot. If a slot is not completely occupied by synchronous traffic, the remaining bits can be used for asynchronous traffic, as was explained above.

As stated in the above, the length of the header of the frame can vary. In the case shown, the length is at least 77 bits, in the case where none of the slots has been allocated to synchronous traffic, and at most 567 bits, in the case that all slots are used for synchronous traffic. As stated, all the bits which are not used for synchronous traffic are available for asynchronous traffic. The capacity for asynchronous traffic is at least 233 bits (field 104) if all the slots are used entirely for synchronous data, but can be greater if, for example, slots (105) have been allocated to sources having variable bit rates. If no synchronous traffic at all is being offered, the capacity for asynchronous traffic is at a maximum and amounts to 18643 bits.

Fig. 4 and Fig. 5 show the manner in which (asynchronous) data packets can be encapsulated in a further (frame) data packet before they are multiplexed in the space for asynchronous traffic. As stated in the above, packets offered can be processed in at least two ways. Packets can, for example, be encapsulated in their entirety, as shown in Fig. 4, the length of the frame data packet thus formed depending on the encapsulated data packet. Alternatively, the data packets offered can be subdivided into suitable parts (cells), whereupon said cells are encapsulated and frame data packets having a fixed length can be produced, as depicted schematically in Fig. 5. Both for Fig. 4 and for Fig. 5 it is the case that the overhead is minimal, so that, as a result of encapsulation, a minimal increase takes place in the amount of information to be transmitted.

A frame data packet (encapsulation) 200 according to Fig. 4 comprises a header or header flag 201, a destination address 202, a parity bit 203, a payload 204 and a trailer or trailer flag 205. The header and trailer flags 201 and 205 are both eight bits in length, in the example depicted. The address field 202 in this case is seven bits in length and therefore provides the option of reaching 128 different addresses. With the aid of the parity bit 203, an error in the address field 202 can be detected, and incorrect addressing is thus prevented. The length of the payload 204 is variable and depends on the data packets to be transported. Because of this variable length, the trailer (flag) 205 has been provided to mark the end of the packet. Should some data of the payload be identical to the trailer, the well-known technique of bit stuffing may be applied to prevent a loss of data.

In the case of Fig. 5, a frame data packet 300 has a fixed length. Consequently, the header flag and trailer flag can be dispensed with, which further limits the overhead and improves the efficiency of the data transmission. The header of the frame data packet 300 of Fig. 5 comprises only an address 302, having seven address bits, and a parity bit 303 for the benefit of error checks. The payload 304 is formed by a data field having a suitable fixed length. Said data field can contain a part (cell) of a data packet offered. For example, in case the ATM technique (as being standardized by ITU) is frequently supported, a suitable length of the payload 304 is 53 octets, bringing the total length of the frame data packet 300 to 54 octets.

As described in the above, the invention provides the possibility of utilizing the capacity of an SDH network more effectively by offering data packets from various sources in multiplexed form to the network. It will be evident to those skilled in the art that the invention is not limited to the examples set out above and that many modifications and additions are possible without departing from the spirit and scope of the present invention.

## Claims

1. Method of transmitting, via a network operating in accordance with the synchronous digital hierarchy (SDH), data packets from a plurality of sources to a plurality of destinations, where the sources can be both synchronous and asynchronous, characterized by the steps of:
- sending the data packets to a first station connecting the sources and the network,
- in the first station, combining the data packets in one or more frames, each frame comprising time slots for accommodating data packets from synchronous sources, and each frame being capable of accommodating data packets from asynchronous sources in time slots which are not or not entirely used by synchronous sources,
- transmitting the frames via the network, in suitable containers, to a second station connecting the network and the destinations,
- in the second station, taking the data packets from the frames, and
- sending the data packets to their respective destinations.

2. Method according to claim 1, wherein for each time slot a bit is provided for specifying whether the time slot in question is used at least partially for a synchronous source.

3. Method according to claim 1 or 2, wherein for each time slot which is at least partially used for a synchronous source a number of bits is provided for specifying which part of the time slot in question is used for the synchronous source.

4. Method according to any of the preceding claims, wherein a number of bits of a frame is reserved for asynchronous sources.

5. Method according to any of the preceding claims, wherein time slots of a frame may be allocated to specific sources.

6. Method according to any of the preceding claims, wherein the data packets from asynchronous sources, prior to being incorporated in the frame, are transformed into frame data packets, the transformation preferably comprising adding identification of the destination of the data packet in question.

7. Method according to claim 6, wherein the transformation comprises encapsulation of the data packets.

8. Method according to claim 6, wherein the transformation comprises extracting the data from each data packet and inserting said data in a frame data packet.

9. Method according to any of the preceding claims, wherein a frame is transmitted as a virtual container of the type 4 (VC-4) in a synchronous transport module.

10. Device for combining, in a frame, data packets to be transmitted via a network operating in accordance with the synchronous digital hierarchy (SDH), which device comprises means for extracting data packets from a data stream, means for combining the extracted data packets in one or more frames, and means for transmitting the frames in virtual containers, each frame comprising time slots for accommodating data packets from synchronous sources, and each frame being capable of accommodating data packets from asynchronous sources in time slots which are not or not entirely used by synchronous sources.

11. Device according to claim 10, comprising means for providing, for each time slot of a frame, a bit for specifying whether the time slot in question is used at least partially for a synchronous source, said means preferably also providing, for each time slot which is at least partially used for a synchronous source, a number of bits for specifying which part of the time slot in question is used for the synchronous source.

12. Device according to Claim 10 or 11, provided with means for encapsulating data packets in a further data packet, which means are designed for adding a header which comprises an identification of the destination of the data packet in question.

13. Device for decomposing a frame transmitted via a network operating in accordance with the synchronous digital hierarchy (SDH), which frame comprises a number of time slots, the device comprising means for decoding structural information of the frame, means for decomposing the frame on the basis of the decoded structural information, and means for transmitting data packets derived from the frame, said structural information comprising, for each time slot of a frame, a bit for specifying whether the time slot in question is used at least partially for a synchronous source, and said structural information preferably also comprising, for each time slot which is at least partially used for a synchronous source, a number of bits for specifying which part of the time slot in question is used for the synchronous source.

14. Device according to claim 13, wherein the means for decomposing the frame comprise means for decapsulating data packets.

15. System for data transmission in accordance with the synchronous digital hierarchy (SDH), arranged for applying the method according to any of claims 1 through 9.
